# EUROPEAN PATENT APPLICATION

(11) **EP 4 578 628 A1**
(43) Date of publication of application: **02.07.2025**
(21) Application number: 24219428.0
(22) Date of filing: 12.12.2024
(51) Int. Cl.: B29C 49/06, B29C 49/48, B29B 11/14, B29C 49/00, B29C 49/54, B29C 45/00, B29C 45/26, B29K 105/00

(54) **MOLD UNIT**

(30) Priority: 28.12.2023 JP 2023222880
(71) Applicant: Sumitomo Heavy Industries, Ltd., Tokyo 141-6025 (JP)
(72) Inventor: YONEZUKA, Shun, 263-0001 Chiba (JP); TAKAHASHI, Rei, 263-0001 Chiba (JP)
(74) Representative: Louis Pöhlau Lohrentz

(57) **Abstract**

Formation of a recessed portion (101, 213) as a molding defect in a thick portion of an intermediate molding product is suppressed without extending a holding pressure time. An injection core (100) that is a first mold for performing injection molding that molds a preform (200), which is an intermediate molding product, molds a protrusion (11, 31, 212) on an inner surface (211) of a thick portion of the preform (200), and when the preform (200) is fitted to a blow core (1, 2), which is a second mold, in order to perform blow molding that molds a final molding product from the preform (200), the blow core (1, 2) crushes the protrusion (11, 31, 212) from an inside of the preform (200).

## Description

### BACKGROUND OF THE INVENTION

### Field of the Invention

The present invention relates to a mold unit.

### Description of Related Art

In injection blow molding that is a molding method in which injection molding and blow molding are performed in two stages, a preform that is an intermediate molding product is molded via the injection molding, and a product such as a container is molded by blowing air into the inside of the preform and stretching the preform via the blow molding (for example, Japanese Patent No. 4425750).

### SUMMARY OF THE INVENTION

The preform, which is an injection-molded intermediate molding product, has a thick portion and a thin portion. Since a volume shrinkage rate due to cooling is different between the thick portion and the thin portion, there is a case where a recessed portion as a molding defect is formed in the thick portion in which the volume shrinkage rate is high. In order to supplement the volume shrinkage in the recessed portion, as so-called holding pressure, molten resin can be pumped in by applying pressure from a cylinder side. However, in a case where the thick portion is located at a position far from a gate side into which the molten resin is injected, it is necessary to extend a holding pressure time in order to make the holding pressure more effective. As a result, a molding cycle may become long.

An object of the present invention is to suppress forming of a recessed portion as a molding defect in a thick portion of an intermediate molding product without extending a holding pressure time.

In order to achieve such an object, according to an aspect of the present invention, there is provided a mold unit in which a first mold that performs injection molding for molding an intermediate molding product molds a protrusion on an inner surface of a thick portion of the intermediate molding product, and when the intermediate molding product is fitted to a second mold in order to perform blow molding for molding a final molding product from the intermediate molding product, the second mold crushes the protrusion from an inside of the intermediate molding product.

Here, the second mold may crush the protrusion while sliding on an inner surface of the intermediate molding product.

In addition, the shape of the protrusion may be a shape in which at least a protrusion is formed even though the shape of the intermediate molding product changes after the injection molding is performed.

In addition, according to another aspect of the present invention, there is provided a mold unit in which, when an intermediate molding product molded by injection molding using a first mold is fitted to a second mold that performs blow molding for molding a final molding product, a part of the second mold presses a difficult-to-stretch portion from an inside of the intermediate molding product.

In addition, a part of the second mold may be disposed at a position where the difficult-to-stretch portion is capable of being pressed inside the intermediate molding product.

In addition, the mold unit may include a stationary side mold, an intermediate mold, and a movable side mold, in which the injection molding is performed in a state where the stationary side mold and the intermediate mold having an injection core as the first mold are mold-closed, and the blow molding is performed in a state where the intermediate mold having a blow core as the second mold and the movable side mold are mold-closed.

According to the present invention, it is possible to suppress forming of a recessed portion as a molding defect in a thick portion of the intermediate molding product without extending a holding pressure time.

### BRIEF DESCRIPTION OF THE DRAWINGS

Fig. 1 is a sectional view showing an example of a configuration of a blow core that is applied to an intermediate mold included in a mold unit according to a first embodiment.
Fig. 2 is a sectional view showing an example of a configuration of an injection core that is applied to the intermediate mold included in the mold unit according to the first embodiment.
Fig. 3 is a diagram showing a specific example in a case where a recessed portion as a molding defect is formed in a preform that is an intermediate molding product.
Fig. 4 is a sectional view showing an example of a state where the preform is fitted to the blow core.
Fig. 5 is a diagram showing a specific example of a bottle container that is a final molding product molded by blow molding.
Figs. 6A and 6B are sectional views showing an example of a configuration of a blow core that is applied to an intermediate mold included in a mold unit according to a second embodiment.
Figs. 7A and 7B are enlarged views of a difficult-to-transfer portion.

### DETAILED DESCRIPTION OF THE INVENTION

Hereinafter, embodiments of the present invention will be described in detail with reference to the accompanying drawings.

### <First Embodiment>

### (Configuration of Blow Core)

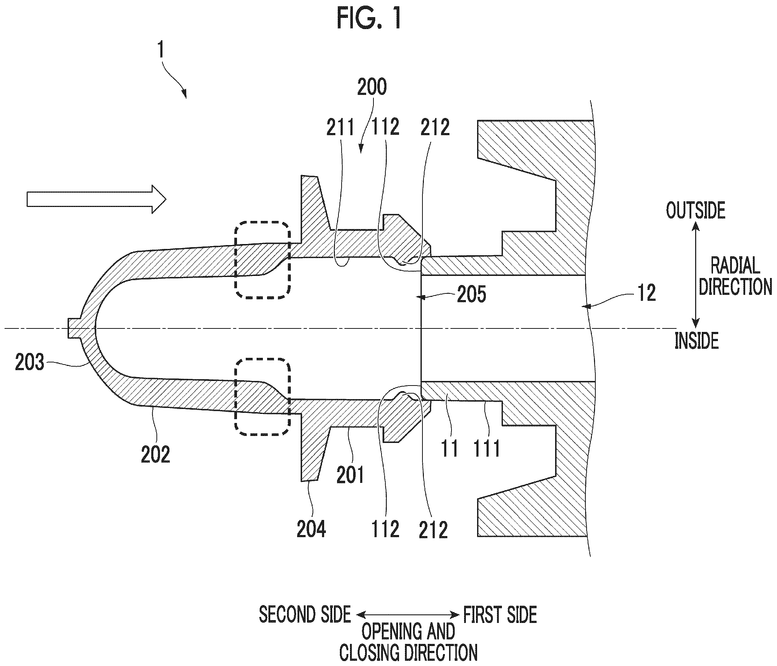

Fig. 1 is a sectional view showing an example of a configuration of a blow core 1 that is applied to an intermediate mold included in a mold unit according to a first embodiment. In Fig. 1, a state where the blow core 1 is viewed from an upper side in an up-down direction toward a lower side is shown. Therefore, the front side of the drawing of Fig. 1 is the upper side in the up-down direction, and the back side of the drawing is the lower side in the up-down direction.

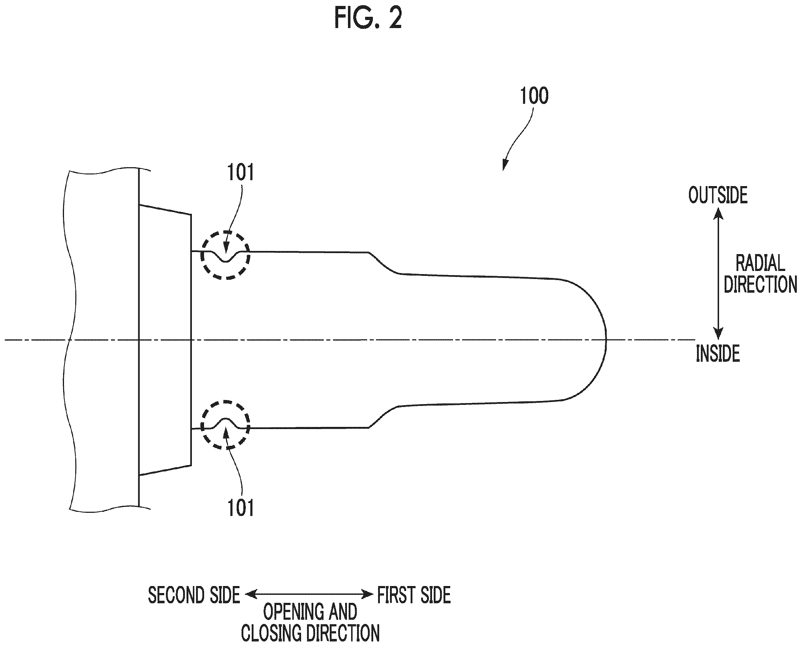

Fig. 2 is a sectional view showing an example of a configuration of an injection core 100 that is applied to the intermediate mold included in the mold unit according to the first embodiment.

The blow core 1 shown in Fig. 1 is one of molds that are applied to the intermediate mold of the mold unit that performs injection blow molding. The intermediate mold to which the blow core 1 is applied is a mold that is disposed between a stationary side mold (not shown) and a movable side mold and that has a rotating frame. The injection blow molding refers to a molding method in which injection molding and blow molding are performed in two stages. The injection molding is performed in a state where the stationary side mold and the intermediate mold are mold-closed. In addition, the blow molding is performed in a state where the movable side mold and the intermediate mold are mold-closed.

In the injection blow molding, first, in the injection molding that is the first-stage molding, a preform 200 that is an intermediate molding product is molded in a state where the stationary side mold and the injection core 100 of the intermediate mold shown in Fig. 2 are mold-closed. The injection-molded preform 200 is rotationally moved to a position where the second-stage molding is performed in a state of being gripped by the rotating frame. Next, in the blow molding that is the second-stage molding, high-pressure air is blown into the inside of the preform 200 in a state where the blow core 1 of the intermediate mold shown in Fig. 1 and the movable side mold are mold-closed, so that the preform 200 is stretched to mold a final molding product. As a method of blowing air into the inside of the preform 200 in the blow molding, for example, a method of causing a stretching rod (not shown) that can output the high-pressure air to protrude into the preform can be given.

In Fig. 1, a state is shown where the injection-molded preform 200 is fitted to the blow core 1 of the intermediate mold in order to be blow-molded. An axial direction of the preform 200 when the preform 200 is fitted to the blow core 1 is a left-right direction in the drawing, and is the same direction as a direction in which the intermediate mold to which the blow core 1 is applied and the movable side mold are opened and closed for the blow molding.

Hereinafter, each of a direction in which the intermediate mold to which the blow core 1 is applied and the movable side mold are opened and closed (the left-right direction in the drawing of Fig. 1) and a direction in which the intermediate mold to which the injection core 100 is applied and the stationary side mold are opened and closed (the left-right direction in the drawing of Fig. 2) is referred to as an "opening and closing direction". Furthermore, the right side of the drawing in the opening and closing direction is referred to as a "first side", and the left side of the drawing in the opening and closing direction is referred to as a "second side". In addition, each of a direction (the up-down direction in the drawing of Fig. 1) perpendicular to the axial direction (the opening and closing direction) of the preform 200 when the preform 200 is inserted into the blow core 1 and a direction (the up-down direction in the drawing of Fig. 2) perpendicular to the axial direction (the opening and closing direction) of the injection core 100 is referred to as a "radial direction". Furthermore, each of a side of a center axis (shown by one-dot chain line) in the radial direction of the preform 200 and a side of a center axis (shown by one-dot chain line) in the radial direction of the injection core 100 is referred to as an "inside", and an opposite side is referred to as an "outside".

As shown in Fig. 1, the preform 200 which is a blow molding target includes a mouth portion 201, a main body 202, and a bottom portion 203. The mouth portion 201, the main body 202, and the bottom portion 203 in the preform 200 are portions of the shape of the preform 200 having continuity, and there is no clear boundary. For this reason, in the present embodiment, a portion on the first side in the opening and closing direction with respect to a fringe 204 which is a portion protruding toward the outside in the preform 200 is defined as the mouth portion 201, and a portion near an end portion on the second side in the opening and closing direction of the preform 200 is defined as the bottom portion 203. In addition, a portion of the preform 200 other than the mouth portion 201 and the bottom portion 203 is defined as the main body 202. The fringe 204 is set to be included in the mouth portion 201.

The blow core 1 has at least a protrusion 11 that is fitted into a blowing port 205 formed in the mouth portion 201 of the preform 200, and a through-hole 12 through which a stretching rod (not shown) that is inserted into the preform 200 penetrates. The protrusion 11 is a cylindrical protrusion that protrudes toward the second side in the opening and closing direction of the blow core 1. An outer surface 111 in the radial direction of the protrusion 11 is configured as a smooth surface that slidably supports an inner surface 211 of the mouth portion 201 of the preform 200, and also functions as a mold that molds at least a part of the surface 211.

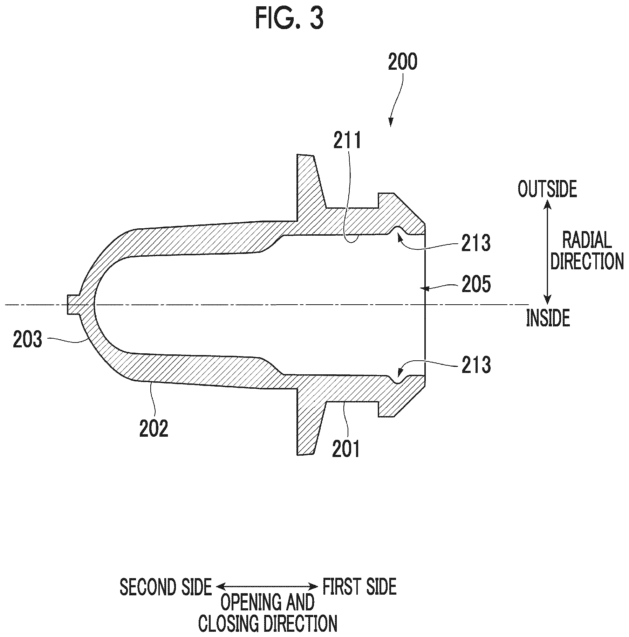

An annular protrusion 212 molded during the injection molding is formed on the inner surface 211 of the mouth portion 201 of the preform 200. The protrusion 212 is a protrusion formed on the inner surface 211 in a thick portion of the preform 200, and is a protrusion that is intentionally molded during the injection molding. That is, a recessed portion 101 is intentionally formed in the injection core 100 of Fig. 2. The recessed portion 101 is filled with molten resin during the injection molding, so that the protrusion 212 of Fig. 1 is molded. The reason why the protrusion 212 is intentionally molded during the injection molding is to prevent a recessed portion as a molding defect from being formed in the preform 200. The recessed portion as a molding defect that is formed on the inner surface 211 of the preform 200 will be described with reference to Fig. 3.

Fig. 3 is a diagram showing a specific example in a case where a recessed portion 213 as a molding defect is formed in the preform 200 that is an intermediate molding product.

In the present embodiment, the protrusion 212 (refer to Fig. 1) is formed in the thick portion of the injection-molded preform 200. In this way, the recessed portion 213 as a molding defect is prevented from being formed on the inner surface 211 of the preform 200. On the other hand, in a case where the protrusion 212 is not formed on the inner surface 211 of the preform 200, as shown in Fig. 3, there is a case where the recessed portion 213 as a molding defect is formed on the inner surface 211 of the thick portion of the preform 200. This is because the volume shrinkage rate due to the cooling of the thick portion of the preform 200 is higher than the volume shrinkage rate due to the cooling of the thin portion.

Since a high accuracy is required for the inner diameter of the mouth portion 201 of the preform 200, when the recessed portion 213 is formed on the inside of the mouth portion 201, the final molding product is highly likely to be treated as a defective product. Although the main body 202 also has a thick portion, in the first embodiment, an object is to suppress the forming of the recessed portion 213 on the inner side of the thick portion of the mouth portion 201 where particularly high accuracy is required. For this reason, for example, the suppression of a molding defect (for example, poor transfer to be described later) that may occur in the thick portion (a portion indicated by a broken line in Fig. 1) of the main body 202 is not a target of an object of the first embodiment, and is an object of a second embodiment to be described later.

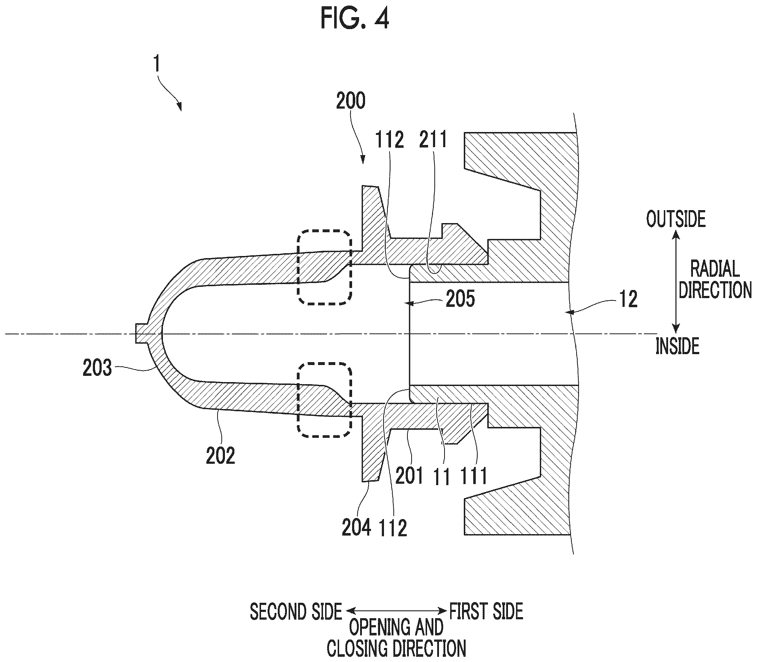

Fig. 4 is a sectional view showing an example of a state where the preform 200 is fitted to the blow core 1.

The preform 200 is fitted to the blow core 1 before the start of the blow molding. Specifically, the preform 200 is fitted to the blow core 1 by using a rotating frame (not shown). In Fig. 4, a state where the blowing port 205 of the preform 200 is fitted to the protrusion 11 of the blow core 1 is shown. The inner surface 211 of the mouth portion 201 of the preform 200 slides on the outer surface 111 in the radial direction of the protrusion 11 of the blow core 1 when the blowing port 205 is fitted to the protrusion 11. In this case, a tip portion 112 of the protrusion 11 of the blow core 1 crushes the protrusion 212 (refer to Fig. 1) of the surface 211 of the preform 200 in accordance with the sliding of the surface 211 of the preform 200. In this way, as shown in Fig. 4, the inner surface 211 in the radial direction of the preform 200 is smoothed.

Here, in a case where the shape or size of the recessed portion 213 (refer to Fig. 3) as a molding defect, which is formed in the preform 200, can be accurately predicted, the thickness of the preform 200 may be set to such a thickness that the inner surface 211 of the preform 200 is smoothed at a stage where the preform 200 is injection-molded. However, since the preforms 200 that are injection-molded have individual differences, it is difficult to accurately predict the shape or size of the recessed portion 213 that may be formed in each preform 200. In addition, as in the example of Fig. 3, the recessed portion 213 may be formed on the inner surface 211 of the thick portion of the preform 200, or the recessed portion 213 may not be formed depending on the molding conditions. In addition, in some cases, an unintended protrusion may be formed on the inner surface 211 of the preform 200 due to some factor.

On the other hand, in the present embodiment, the mold for injection molding is configured to necessarily form the protrusion 212 on the inner surface 211 of the preform 200. The shape or size of the protrusion 212 that is formed in the preform 200 is not particularly limited, and for example, the shape or size of the protrusion 212 is designed by predicting to some extent the shape or size of the recessed portion 213 that can be formed in a case where the protrusion 212 is not formed in the preform 200. Then, the shape of the recessed portion 101 of the injection core 100 in Fig. 2 is designed in accordance with the shape or size of the designed protrusion 212.

The prediction of the shape or size of the recessed portion 213 is performed based on information on past molding results or prototypes, or the like. However, it is only necessary that the protrusion 212 having a size that can be crushed by the tip portion 112 of the protrusion 11 of the blow core 1 when the preform 200 is fitted to the blow core 1 is formed. Therefore, it is not necessary to accurately predict the shape or size of the recessed portion 213 that can be formed in a case where the protrusion 212 is not formed in the preform 200.

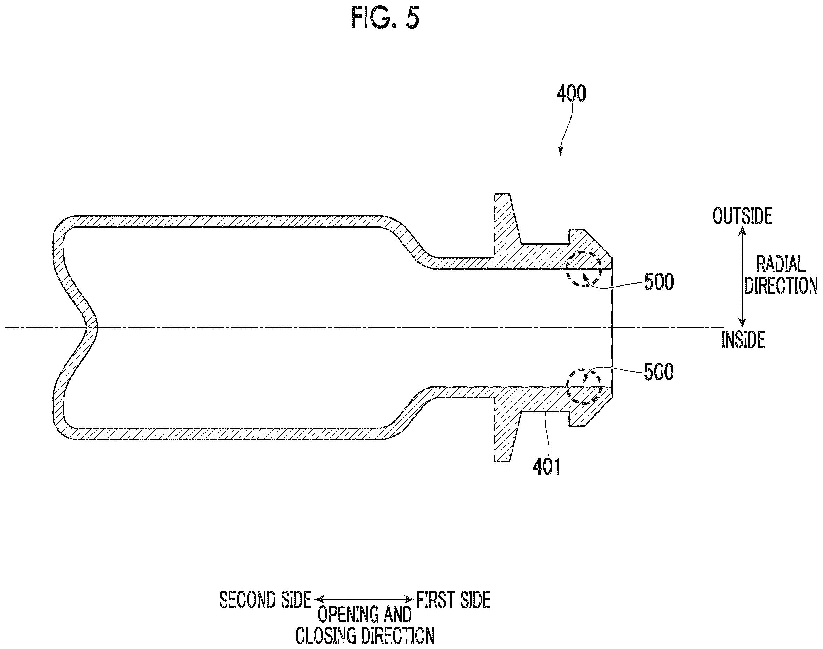

Fig. 5 is a diagram showing a specific example of a bottle container 400 that is a final molding product molded by the blow molding.

When the blow molding is performed after the preform 200 is fitted to the blow core 1 by the method shown in Fig. 4, for example, as shown in Fig. 5, the bottle container 400 as a final molding product is molded. A position 500 indicated by a broken line at a mouth portion 401 of the bottle container 400 shown in Fig. 5 indicates a position where the protrusion 212 (refer to Fig. 1) of the preform 200 is formed. The position 500 is a smooth surface because it is crushed by the blow core 1 (refer to Fig. 4).

In summary, the mold unit to which the present invention is applied can take various embodiments with the following configurations.

That is, the mold unit according to the first embodiment is a mold unit in which the injection core 100, which is a first mold for performing injection molding that molds the preform 200 that is an intermediate molding product, molds the protrusion 212 on the inner surface 211 of a thick portion of the preform 200, and when the preform 200 is fitted to the blow core 1 that is a second mold in order to perform blow molding that molds a final molding product from the preform 200, the blow core 1 crushes the protrusion 212 from an inside of the preform 200.

Accordingly, the protrusion 212 is molded on the inner surface 211 of the thick portion of the preform 200 by the injection molding. Then, when the preform 200 is fitted to the blow core 1 in order to perform the blow molding, the blow core 1 crushes the protrusion 212 from the inside of the preform 200. As a result, the inner surface 211 of the preform 200 can be smoothed in the operation of the related art in which the preform 200 is fitted to the blow core 1 in order to perform the blow molding, without extending a holding pressure time.

Here, the blow core 1 may crush the protrusion 212 while sliding on the inner surface 211 of the preform 200.

Accordingly, the blow core 1 crushes the protrusion 212 while sliding on the inner surface 211 of the preform 200. As a result, when the preform 200 is fitted to the blow core 1 in order to perform the blow molding, the inner surface 211 of the preform 200 can be smoothed in the operation of the related art in which the blow core 1 is slid on the inner surface 211 of the preform 200.

In addition, the shape of the protrusion 212 may be a shape in which at least a protrusion is formed even though the shape of the preform 200 changes after the injection molding is performed (for example, even though the volume is contracted due to cooling).

Accordingly, the shape of the protrusion 212 is designed such that at least a protrusion is formed by a change in the shape of the preform 200 after the injection molding is performed. As a result, since the protrusion 212 is necessarily formed on the inner surface 211 of the thick portion of the preform 200 when the preform 200 is fitted to the blow core 1, the surface 211 can be smoothed.

In addition, the mold unit may include a stationary side mold, an intermediate mold, and a movable side mold, in which the injection molding is performed in a state where the stationary side mold and the intermediate mold having the injection core 100 as the first mold are mold-closed, and the blow molding is performed in a state where the intermediate mold having the blow core 1 as the second mold and the movable side mold are mold-closed.

Accordingly, in the mold unit, the injection molding is performed in a state where the stationary side mold and the intermediate mold having the injection core 100 as the first mold are mold-closed, so that the protrusion 212 is molded on the inner surface 211 of the thick portion of the preform 200. Then, when the preform 200 is fitted to the blow core 1 in order to perform the blow molding in a state where the intermediate mold having the blow core 1 as the second mold and the movable side mold are mold-closed, the blow core 1 crushes the protrusion 212 from the inside of the preform 200. As a result, the inner surface 211 of the preform 200 can be smoothed in the operation of the related art in which the preform 200 is fitted to the blow core 1 in order to perform the blow molding, without extending a holding pressure time.

### <Second Embodiment>

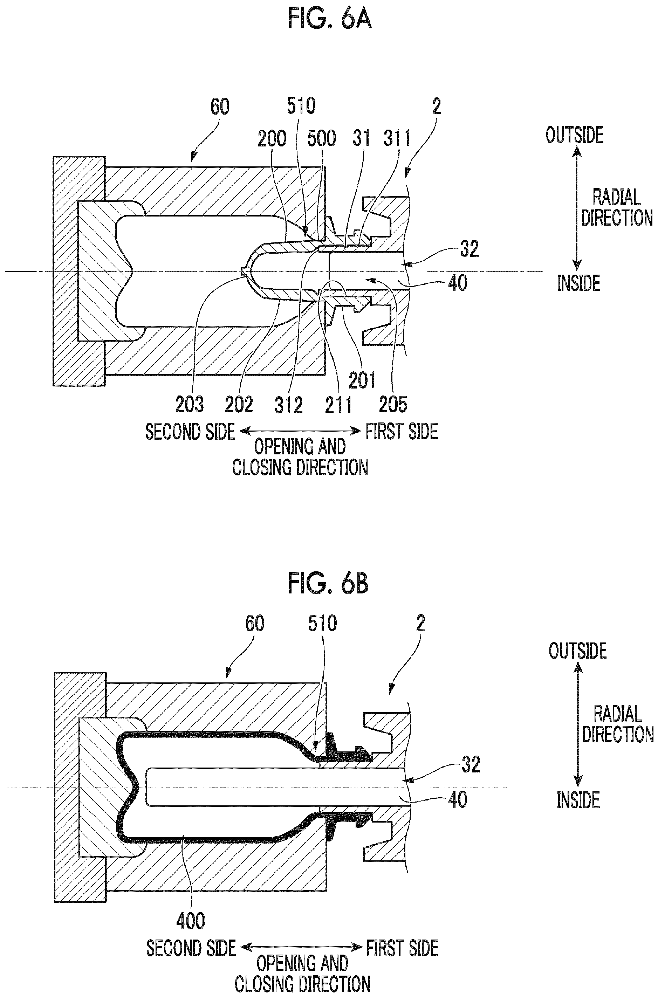

Figs. 6A and 6B are sectional views showing an example of a configuration of a blow core 2 that is applied to an intermediate mold included in a mold unit according to a second embodiment. In Figs. 6A and 6B, a state where the blow core 2 is viewed from the upper side in the up-down direction toward the lower side is shown. Therefore, the front side of the drawing in Figs. 6A and 6B is the upper side in the up-down direction, and the back side of the drawing is the lower side in the up-down direction.

The blow core 2 shown in Figs. 6A and 6B is one of the molds that are applied to the intermediate mold included in the mold unit for performing the injection blow molding, as in the first embodiment described above. In addition, the intermediate mold to which the blow core 2 is applied is a mold disposed between a stationary side mold (not shown) and a movable side mold 60, and is a mold having a rotating frame.

In Fig. 6A, a state where the injection-molded preform 200 has been inserted into the blow core 2 of the intermediate mold in order to be blow-molded is shown. The axial direction of the preform 200 inserted into the blow core 2 is the left-right direction in the drawing, and is the same direction as the direction in which the intermediate mold to which the blow core 2 is applied and the movable side mold are opened and closed for blow molding.

The blow core 2 has at least a protrusion 31 that is fitted into the blowing port 205 formed in the mouth portion 201 of the preform 200, and a through-hole 32 through which a stretching rod 40 that is inserted into the preform 200 penetrates. The protrusion 31 is a cylindrical protrusion that protrudes toward the second side in the opening and closing direction of the blow core 2. An outer surface 311 of the protrusion 31 is configured to be a smooth surface that slidably supports the inner surface 211 of the mouth portion 201 of the preform 200, and also functions as a mold that molds at least a part of the surface 211. A difference between the first embodiment and the second embodiment is that the protrusion 31 of the blow core 2 according to the second embodiment is longer toward the second side in the opening and closing direction than the protrusion 11 (refer to Fig. 1) of the blow core 1 according to the first embodiment. Specifically, the protrusion 31 of the blow core 2 has a shape that is long to an extent that a part thereof is inserted into the inside of the movable side mold 60 which is located on the second side in the opening and closing direction with respect to the blow core 2.

During the blow molding, the main body 202 and the bottom portion 203 of the preform 200 are stretched by the high-pressure air output from the stretching rod 40 shown in Fig. 6B, and the shape of the movable side mold 60 is transferred thereto. Then, the bottle container 400, which is a final molding product, is molded. However, the main body 202 (refer to Fig. 6A) of the preform 200 has a portion (hereinafter, referred to as a "difficult-to-transfer portion 510") to which the shape of the mold is difficult to be transferred during the blow molding. The difficult-to-transfer portion 510 is, for example, a difficult-to-stretch portion or the like due to a thick thickness. Specifically, for example, with reference to Fig. 1 described above, in a portion surrounded by a broken line of the preform 200, there is a boundary portion between a portion that is substantially solidified during injection molding and a portion that is stretched as a blow molding target while maintaining a molten state. This boundary portion corresponds to the difficult-to-transfer portion 510 shown in Fig. 6A.

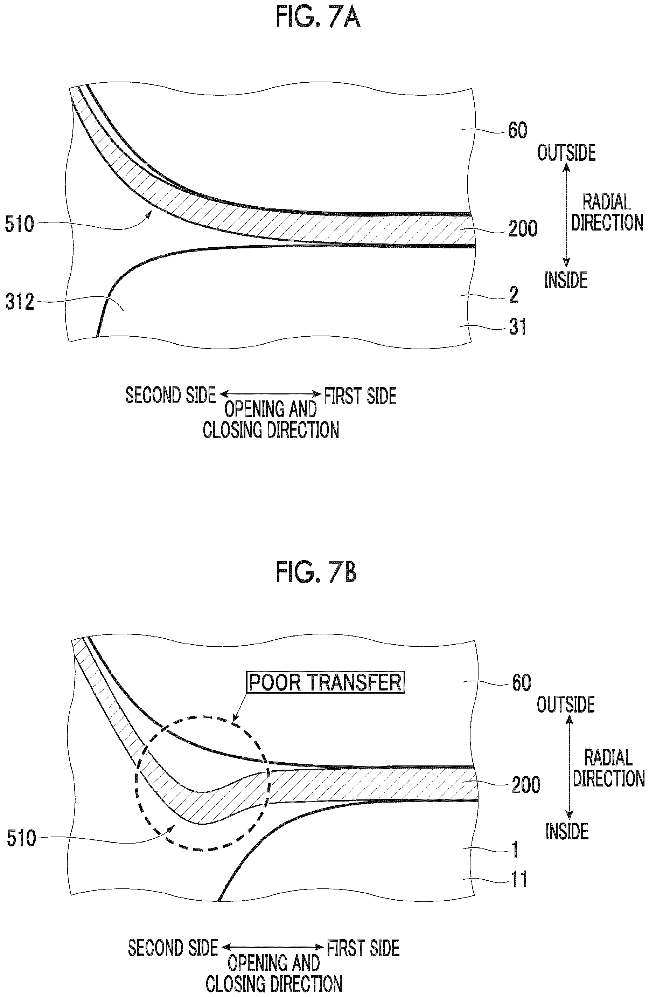

Figs. 7A and 7B are enlarged views of the difficult-to-transfer portion 510 shown in Fig. 6A described above.

Fig. 7A shows an enlarged view of the difficult-to-transfer portion 510 in a case where the injection molding is performed by the blow core 2 according to the second embodiment. Fig. 7B shows an enlarged view of the difficult-to-transfer portion 510 in a case where the injection molding is performed by the blow core 1 according to the first embodiment described above as a comparison target. The difficult-to-transfer portion 510 shown in Fig. 7B is a thick portion of the preform 200 indicated by a broken line in Figs. 1 and 4 described above.

As shown in Figs. 7A and 7B, the protrusion 31 of the blow core 2 according to the second embodiment is longer toward the second side in the opening and closing direction than the protrusion 11 of the blow core 1 according to the first embodiment. For this reason, as shown in Fig. 7A, the protrusion 31 of the blow core 2 is pushed along the movable side mold 60 located outside the difficult-to-transfer portion 510 in the radial direction. As a result, poor transfer that is a molding defect is suppressed. On the other hand, as shown in Fig. 7B, the length of the protrusion 11 of the blow core 1 toward the second side in the opening and closing direction is not a length sufficient to push the difficult-to-transfer portion 510 toward the movable side mold 60 located outside in the radial direction, and therefore, poor transfer occurs in the difficult-to-transfer portion 510.

That is, the mold unit according to the second embodiment of the present invention is a mold unit in which, when the preform 200, which is an intermediate molding product molded by injection molding by the injection core 100 that is a first mold, is fitted to the blow core 2 that is a second mold that performs blow molding for molding a final molding product, a tip portion 312 of the protrusion 31 that is a part of the blow core 2 presses the difficult-to-transfer portion 510, which is a difficult-to-stretch portion, from an inside of the preform 200.

Accordingly, when the preform 200, which is the intermediate molding product molded by the injection core 100, is fitted to the blow core 2, the tip portion 312 of the protrusion 31, which is a part of the blow core 2, presses the difficult-to-transfer portion 510, which is a difficult-to-stretch portion, from the inside of the preform 200. As a result, the difficult-to-transfer portion 510 is pushed toward the movable side mold 60. Therefore, the transfer is easily performed, and poor transfer is suppressed.

Here, the tip portion 312 of the protrusion 31, which is a part of the blow core 2, may be disposed at a position where the difficult-to-transfer portion 510 can be pressed inside the preform 200 (for example, a position inserted into the inside of the movable side mold 60).

Accordingly, the tip portion 312 of the protrusion 31, which is a part of the blow core 2 that presses the difficult-to-transfer portion 510, is disposed at a position where the difficult-to-transfer portion 510 can be pressed inside the preform 200. As a result, the difficult-to-transfer portion 510 is pushed toward the movable side mold 60, so that the difficult-to-transfer portion 510 is easily transferred, and poor transfer is suppressed.

In addition, the mold unit may include a stationary side mold, the movable side mold 60, and an intermediate mold, in which the injection molding is performed in a state where the stationary side mold and the intermediate mold having the injection core 100 as the first mold are mold-closed, and the blow molding is performed in a state where the movable side mold 60 and the intermediate mold having the blow core 2 as the second mold are mold-closed.

Accordingly, when the preform 200, which is the intermediate molding product molded by the injection core 100 of the intermediate mold, is fitted to the blow core 2 of the intermediate mold, the tip portion 312 of the protrusion 31, which is a part of the blow core 2, presses the difficult-to-transfer portion 510, which is a difficult-to-stretch portion, from the inside of the preform 200. As a result, the difficult-to-transfer portion 510 is pushed toward the movable side mold 60, so that the difficult-to-transfer portion 510 is easily transferred, and poor transfer is suppressed.

### <Comparison of Embodiments>

The blow core 2 that is applied to the intermediate mold included in the mold unit according to the second embodiment has basically the same configuration as the blow core 1 that is applied to the intermediate mold included in the mold unit according to the first embodiment described above. However, the length toward the second side in the opening and closing direction of the portion of the protrusion 31 of the blow core 2, which can be inserted into the preform 200, is longer than the length toward the second side in the opening and closing direction of the portion of the protrusion 11 of the blow core 1 that can be inserted into the preform 200. Therefore, when the preform 200 is fitted to the protrusion 31 of the blow core 2, the protrusion 31 is deeply inserted into the preform 200, so that the tip portion 312 on the second side in the opening and closing direction of the protrusion 31 can push the difficult-to-transfer portion 510 of the preform 200 toward the outside in the radial direction. As a result, the second embodiment is more likely to suppress the occurrence of poor transfer in the difficult-to-transfer portion 510 than the first embodiment.

### <Others>

Although the embodiments of the present invention have been described above, the present invention is not limited to the embodiments described above. Further, the effects of the present invention are also not limited to those described in the embodiments described above. For example, the configurations of the blow core 1 shown in Figs. 1 and 4, the injection core 100 shown in Fig. 2, and the blow core 2 shown in Figs. 6A and 6B are merely examples for achieving the object of the present invention, and are not particularly limited.

In addition, in the embodiments described above, the final molding product is the bottle container 400. However, the final molding product does not need to be a bottle container. The final molding product may be any molding product molded via the injection blow molding.

Furthermore, the final molding product does not need to be a molding product molded by the injection blow molding. Since the molding of the intermediate molding product and the molding of the final molding product may be performed by using different molds, for example, a molding product molded by so-called two-color molding in which different resins or materials are combined and integrated, or a molding product molded by so-called insert molding in which an insert product such as a metal screw or a terminal is inserted into a mold in advance and molten resin is injected around the insert product to be integrally molded may be the final molding product.

### Brief Description of the Reference Symbols

1, 2: blow core
11, 31: protrusion
12, 32: through-hole
40: stretching rod
60: movable side mold
100: injection core
200: preform
201: mouth portion
202: main body
203: bottom portion
204: fringe
205: blowing port
212: protrusion
400: bottle container
510: difficult-to-transfer portion

## Claims

1. A mold unit in which a first mold that performs injection molding for molding an intermediate molding product (200) molds a protrusion (11, 31, 212) on an inner surface (211) of a thick portion of the intermediate molding product (200), and
when the intermediate molding product (200) is fitted to a second mold in order to perform blow molding for molding a final molding product from the intermediate molding product (200), the second mold crushes the protrusion (11, 31, 212) from an inside of the intermediate molding product (200).

2. The mold unit according to claim 1,
wherein the second mold crushes the protrusion (11, 31, 212) while sliding on the inner surface (211) of the intermediate molding product (200).

3. The mold unit according to claim 1,
wherein a shape of the protrusion (11, 31, 212) is a shape in which at least a protrusion (11, 31, 212) is formed even though a shape of the intermediate molding product (200) changes after the injection molding is performed.

4. A mold unit in which, when an intermediate molding product(200) molded by injection molding using a first mold is fitted to a second mold that performs blow molding for molding a final molding product, a part of the second mold presses a difficult-to-stretch portion from an inside of the intermediate molding product (200).

5. The mold unit according to claim 4,
wherein a part of the second mold is disposed at a position where the difficult-to-stretch portion is capable of being pressed inside the intermediate molding product (200) .

6. The mold unit according to claim 1 or 4, comprising:
a stationary side mold;
an intermediate mold; and
a movable side mold (60),
wherein the injection molding is performed in a state where the stationary side mold and the intermediate mold having an injection core (100) as the first mold are mold-closed, and
the blow molding is performed in a state where the intermediate mold having a blow core (1, 2) as the second mold and the movable side mold (60) are mold-closed.
